# EUROPÄISCHE PATENTSCHRIFT

(11) **EP 2 049 315 B1**
(45) Veröffentlichungstag und Bekanntmachung des Hinweises auf die Patenterteilung: **16.01.2013**
(21) Anmeldenummer: 07786314.0
(22) Anmeldetag: 25.07.2007
(51) Int. Cl.: B29C 33/38, B29C 33/76, B29C 45/26, B23K 31/02, B23K 20/12, B22D 17/22, B29C 45/28, B29C 45/40

(54) **AUSWERFERSTIFT FÜR EINE WERKZEUGFORM SOWIE VERFAHREN ZUM HERSTELLEN EINES SOLCHEN AUSWERFERSTIFTS**
EJECTOR PIN FOR A MOULD AND PROCESS FOR PRODUCTION OF THIS EJECTOR PIN
TIGE D'ÉJECTION POUR UN MOULE ET PROCÉDÉ DE FABRICATION D'UNE TELLE TIGE D'ÉJECTION

(30) Priorität: 31.07.2006 DE 102006035927
(43) Veröffentlichungstag der Anmeldung: 22.04.2009
(73) Patentinhaber: Drei-S-Werk Präzisionswerkzeuge GmbH & Co. Fertigungs-KG, 91564 Neuendettelsau (DE)
(72) Erfinder: SCHMAUSER, Till, M., 91126 Schwabach (DE); EICHINGER, Pius, 92283 Lauterhofen (DE)
(74) Vertreter: FDST Patentanwälte
(86) Internationale Anmeldenummer: PCT/EP2007/006589
(87) Internationale Veröffentlichungsnummer: WO 2008/014910

(56) Entgegenhaltungen:
- JP-A- 60 118 334
- JP-A- 2004 042 555
- US-A- 5 632 078
- US-A1- 2005 045 746

## Beschreibung

Die Erfindung betrifft einen Werkzeugstift für eine Werkzeugform, wie sie im Werkzeug - und Formenbau eingesetzt wird. Die Erfindung betrifft weiterhin ein Verfahren zum Herstellen eines derartigen Werkzeugstiftes.

Unter Werkzeugstiften werden derartige stiftförmige Elemente verstanden, welche in Druckguss- oder Spritzgusswerkzeugen beispielsweise für die Herstellung von Kunststoff-Bauteilen, eingesetzt werden. Derartige Werkzeugstifte sind insbesondere so genannte Auswerferstifte zum Auswerfen des spritzgegossenen Bauteils aus der Werkzeugform. Die Spezifikation für einen derartigen Auswerferstift ergibt sich beispielsweise aus der DIN ISO 6751.

Die Werkzeugstifte werden bei ihrem Einsatz in der Werkzeugform in ihrer Längsrichtung geführt. Die Werkzeugstifte bestehen hierbei üblicherweise aus einem Kopf, einem sich daran anschließenden Schaft, an dessen Ende sich das Stiftende befindet. Bei diesen Werkzeugstiften handelt es sich um Hochpräzisionsteile, die je nach Ein-. satzgebiet und Anwendungszweck teilweise sehr hohen Anforderungen ausgesetzt sind. In der Regel müssen sie hohe mechanische Kräfte bei teilweise hoher thermischer Beanspruchung übertragen. Gleichzeitig müssen sie möglichst reibungsarm und hochgenau geführt sein. Aufgrund der hohen Beanspruchungen werden in vielen Fällen als Material hochwertige und damit teuere Stähle, beispielsweise hochlegierte Schnellarbeitsstähle (HSS-Stahl) eingesetzt, die teilweise zusätzlich noch nachbehandelt, beispielsweise wärmebehandelt oder auch nitriert sind. Die Wärmebehandlung und Nitrierung dienen zur Erhöhung der Oberflächenhärte und somit zur Verringerung der Reibung. Aufgrund der Notwendigkeit des Einsatzes von hochwertigen Stählen sind insbesondere bei größeren Werkzeugstiften mit großen Durchmessern beispielsweise ab 20 mm und großen Längen von über 300 mm die Materialkosten vergleichsweise hoch.

Ein Auswerferstift gemäβ dem Oberbegriff des Anspruchs 1 ist beispielsweise zu entnehmen aus der JP 2004042555 A, der eine angeschweißte verschleißfeste Spitze aufweist. Aus der US 2005/045746 A1, der

US-A-5632078 sowie der JP 60118334 A sind weitere Zubehörteile für Werkzeugformen zu entnehmen, nämlich Verschlussnadeln für eine Heißkanaldüse (US 2005/045746 A1, US-A-5632078) sowie ein Schneidstempel (JP 60118334 A), die jeweils aus mehreren Teilen aus unterschiedlichen Materialien zusammengesetzt sind.

Der Erfindung liegt die Aufgabe zugrunde, einen Werkzeugstift anzugeben, der den hohen Anforderungen genügt und zugleich in möglichst einfacher und kostengünstiger Weise herstellbar ist.

Die Aufgabe wird gemäß der Erfindung gelöst durch einen Werkzeugstift, nämlich ein Auswerferstift gemäß Anspruch 1. Danach ist ein modularer Aufbau für den Werkzeugstift vorgesehen, welcher aus den Modulteilen Kopf, Schaft sowie Stiftende besteht, wobei die Modulteile als eigenständige Modulteile ausgebildet sind, die mit Hilfe eines Fügeprozesses mechanisch fest zusammengefügt sind.

Diese Ausgestaltung geht von der Überlegung aus, dass diese drei Modulteile Kopf, Schaft, Stiftende drei Funktionszonen darstellen, die jeweils unterschiedlichen Anforderungen ausgesetzt sind und daher auch unterschiedliche Eigenschaften aufweisen sollten. Durch die getrennte Herstellung dieser Modulteile besteht die Möglichkeit, sehr flexibel das jeweilige Modulteil den jeweiligen Anforderungen genau anzupassen. Durch den modularen Aufbau ist der Werkzeugstift daher sehr flexibel im Hinblick auf seine Form, seine Größe, seine Materialwahl, etc. an die jeweiligen Anforderungen anpassbar. Zugleich wird mit der Bereitstellung von vereinzelten Modulteilen, die erst anschließend zusammengefügt werden, eine einfache und damit kostengünstige Fertigung erreicht. Für die Modulteile wird nämlich bereits geeignete Rohware verwendet, so dass der Aufwand für eine Nachbehandlung gering ist. Insbesondere werden bei der Verwendung des Kopfes als eigenständiges Modulteil die mit dem bisher üblichen Umformen verbundenen Nachteile vermieden. Insbesondere ist nämlich durch das separate Anfügen eines Kopf-Modulteils eine hohe Maßgenauigkeit im Unterkopfbereich mit geringem Aufwand zu erzielen. Schließlich ist durch den modularen Aufbau auch eine Kosteneinsparung durch eine gezielte Materialauswahl möglich, da beispielsweise für den im Vergleich zum Stiftende weniger belasteten Schaft günstige Materialien eingesetzt werden können.

Bei dem Werkzeugstift ist üblicherweise das Stiftende im Einsatz einer hohen Belastung ausgesetzt. Bevorzugt ist daher das Stiftende als ein eigenständiges Modulteil ausgebildet, das an die hohen Anforderungen angepasst und entsprechend hochwertig ist. Hierdurch können der Schaft und/ oder der Kopf entsprechend den geringeren Anforderungen mit geringerer Güte und damit kostengünstiger ausgebildet werden. Insgesamt lässt sich dadurch ein qualitativ hochwertiger Werkzeugstift zu vergleichsweise geringen Kosten herstellen.

Gemäß einer zweckdienlichen Weiterbildung ist daher auch vorgesehen, dass die eigenständigen Modulteile aus verschiedenen Werkstoffen bestehen. Neben der Kosteneinsparung ist hierdurch als wesentlicher Vorteil auch die Anpassung an die jeweilige Anforderung zu sehen. Insbesondere können durch diese Maßnahme für das üblicher weise hoch belastete Stiftende entsprechend hochwertige Materialien eingesetzt werden. Gleichzeitig besteht auch die Möglichkeit, die unterschiedlichen Materialien entsprechend den Funktionszonen unterschiedlich weiter zu behandeln, vorzugsweise vor dem Zusammenfügen der eigenständigen Modulteile, so dass der gefertigte Werkzeugstift nicht mehr weiter vergütet werden muss. Unter weiterer Vergütung wird hier beispielsweise eine Wärmebehandlung, Nitrierung, etc. verstanden, mit der insbesondere die Oberflächeneigenschaften verändert werden.

Vorzugsweise ist hierbei vorgesehen, dass der Schaft aus einem nitrierten Stahl, insbesondere Warmarbeitsstahl (WAS), oder aus einer so genannten Kupferknetlegierung mit hoher Temperaturleitfähigkeit besteht.

Die Eingruppierung der Werkzeugstähle ist beispielsweise in der DIN 17350 definiert. Hierin wird bei den Werkzeugstählen insbesondere zwischen der Legierungsgruppe WS (legierte Kaltarbeitsstähle der Stahlsorte 1.2067 oder ähnliche), der Legierungsgruppe WAS (legierte Warmarbeitsstähle), der Legierungsgruppe HWS (hochlegierte Kaltarbeitsstähle der Stahlsorten 1.2379 oder ähnliche) oder der Legierungsgruppe HSS (hochlegierte Schnellarbeitsstähle der Stahlsorte 1.3343 oder ähnliche) unterschieden. Das Nummern-Bezeichnungssystem für die einzelnen Stahlsorten ist beispielsweise in der DIN 17007, Teil 2 definiert. Die Zuordnung der Nummern der einzelnen Stahlsorten zu der jeweiligen Stahlsorte ergibt sich weiterhin auch aus dem so genannten "Stahlschlüssel", ein vom Verlag Stahlschlüssel Wegst GmbH herausgegebenes Standard-Nachschlagewerk.

Durch die Verwendung eines nitrierten Warmarbeitsstahls, insbesondere der Stahlsorten 1.2343 oder 1.2344 wird der Schaft optimal für das Anforderungsprofil angepasst, so dass eine gute Führung bei geringer Reibung erzielt ist. Gleichzeitig sind über den Schaft hiermit die Druck- und Zugbelastungen übertragbar. Zudem ist ein derartiger Stahl auch bei thermisch hoch beanspruchten Bauteilen problemlos einsetzbar. Die Ausbildung des Schafts aus einer speziellen Kupfer-Knetlegierung wird insbesondere dann eingesetzt, wenn der Werkzeugstift zusätzlich die Funktion einer Temperaturableitung wahrnehmen muss, wie dies beispielsweise bei Kernen der Fall ist, die aus dem Inneren eines spritzgegossenen Bauteils Wärme abführen müssen.

Für das Modulteil des Kopfes wird vorzugsweise ein legierter Kaltarbeitsstahl (WS) oder ein legierter Warmarbeitsstahl (WAS) eingesetzt. Der Funktionsbereich des Kopfes ist üblicherweise hohen Druck- und Zugbelastungen sowie auch Biegebelastungen ausgesetzt. Entsprechend diesem Anforderungsprofil ist der Werkstoff geeignet gewählt. Als Warmarbeitsstahl werden beispielsweise die Stahlsorten (ohne Nitrierung) verwendet, wie sie auch für den Schaft vorgesehen sind. Und im Hinblick auf die Kaltarbeitsstähle (WS) werden beispielsweise die Stahlsorten 1.3505 oder 1.2067 herangezogen. Ebenfalls wie für den Schaft können darüber hinaus auch Spezial-Kupferknetlegierungen eingesetzt werden, um eine hohe Temperaturleitfähigkeit zu erzielen.

Schließlich wird als Werkstoff für das Stiftende in zweckdienlichen Ausführungsformen wahlweise ein hochlegierter Stahl, insbesondere ein hochlegierter Schnellarbeitsstahl HSS, ein pulvermetallurgischer Stahl, ein Hartmetall oder eine Keramik jeweils wahlweise eingesetzt. Derartige Werkstoffe sind speziell für die hohen Anforderungen angepasst, denen das Stiftende ausgesetzt ist. So wird nämlich das Stiftende üblicherweise durch Abrasion, Adhäsion und - je nach Einsatzgebiet - durch hohe Temperaturen belastet. Als hochlegierter Schnellarbeitsstahl (HSS) wird beispielsweise die Stahlsorte 1.3343 eingesetzt. Werden beispielsweise Auswerferstifte im Schaft- und Kopfbereich aus einer Spezial-Kupferknetlegierung gebildet, so wird als Werkstoff für das Stiftende bevorzugt ein gehärteter Warmarbeitsstahl der Stahlsorte 1.3505 oder 1.2067 eingesetzt. Aufgrund der zusätzlichen Härtung ist dieser Werkstoff ebenfalls für die mechanischen Belastungen geeignet. Insbesondere bei einer Ausgestaltung des Werkzeugstifts bei dem die Kanten und Flächen einer hohen mechanischen Belastung ausgesetzt sind, werden als Werkstoff für das Stiftende sehr harte und feste Werkstoffe wie die pulvermetallurgischen Stähle, Hartmetalle oder Keramik eingesetzt. Gleiches gilt auch für die im (Aluminium-)Druckguss eingesetzten Auswerfer. Unter pulvermetallurgischen Stählen werden hierbei derartige Stähle verstanden, die durch einen Sintervorgang aus Metallpulver erhalten sind. Ähnliches gilt für die so genannten Hartmetalle, unter denen man in der Regel gesinterte Carbid-Hartmetalle versteht, die als Matrix-Grundwerkstoff Wolframcarbid aufweisen. Die für das Stiftende eingesetzten Werkstoffe zeichnen sich allgemein durch eine sehr hohe Härte und Verschleißfestigkeit aus, wohingegen die für den Schaft und den Kopf eingesetzten Werkstoffe sich durch eine im Vergleich zu den Werkstoffen des Stiftendes höhere Zähigkeit auszeichnen.

Das Stiftende besteht daher vorzugsweise aus einem höherwertigen Werkstoff als der Schaft. Unter höherwertig wird hierbei insbesondere ein Werkstoff mit einer höheren Verschleißbeständigkeit und einer höheren Härte verstanden. Da der Schaft im Vergleich zum Stiftende insbesondere bei langen Werkzeugstiften einen großen Materialanteil am Gesamtwerkzeugstift bereitstellt, wird durch diese Maßnahme nur für das hoch belastete Stiftende ein teuerer, hochwertiger Werkstoff verwendet, so dass insgesamt ein kostengünstiger Werkzeugstift erhalten ist.

Um in möglichst einfacher Weise eine zuverlässige und dauerhaft feste mechanische Verbindung zwischen den zumindest zwei Modulteilen zu erzielen, werden diese durch Schweißen, insbesondere dem so genannten Reibschweißen, zusammengefügt. Allgemein werden die Teile mit thermischen Fügeverfahren verbunden wie das Hartlöten oder wie das Schweißen, insbesondere Reibschweißen, oder das so genannte MBL-Schweißen (Schweißen Mit Bewegten Lichtbogen), das als "Magnetarc"-Schweißen von der Kuka Schweißanlagen GmbH eingesetzt wird.

Um eine möglichst gute Anpassung an das jeweilige Anforderungsprofil zu erreichen, sind vorzugsweise alle drei Teile als eigenständige Modulteile mit Hilfe des Fügeprozesses mechanisch fest zusammengefügt.

Zweckdienlicherweise ist weiterhin vorgesehen, dass die einzelnen Modulteile unterschiedliche Querschnittskonturen aufweisen. Beispielsweise weist das Stiftende eine rechteckige und der Schaft eine runde Querschnittskontur auf. Allgemein können die drei Teile beliebige, jeweils unterschiedliche Querschnittskonturen, beispielsweise mehreckige, runde oder ovale Konturen aufweisen. Weiterhin ist insbesondere auch vorgesehen, dass der Schaft und das Stiftende unterschiedliche Durchmesser haben, dass also die Querschnittsflächen unterschiedlich groß sind. Aufgrund der Ausgestaltung aus einzelnen Modulteilen, lassen sich derartige Unterschiede in Form und Größe der einzelnen Modulteile leicht verwirklichen. Insbesondere kann schon eine geeignet vorausgewählte Rohware herangezogen werden, so dass beispielsweise zur Erzeugung von Stiftenden mit verringerten Durchmessern kein aufwändiger Materialabtrag stattfinden muss.

Weiterhin sind aufgrund der modularen Ausgestaltung auch unterschiedlichste Kopfgeometrien möglich, so dass die Kopfform sich problemlos im Hinblick auf das jeweils gewünschte Einsatzgebiet anpassen lässt. Im einfachsten Fall ist der Kopf als eine flache Platte ausgebildet. Daneben kann er sich zum Schaft und/oder zur schaftabgewandten Seite konisch verjüngen. Schließlich ist er beispielsweise insgesamt als ein sich zum Schaft hin konisch verjüngender Kegel ausgebildet.

Auch lassen sich aufgrund der modularen Ausgestaltung Formen und Abmessungen erhalten, die mit einem herkömmlichen Umformverfahren nicht erreichbar sind. Insbesondere ist vorgesehen, dass der Kopf im Vergleich zum Schaft eine Geometrie aufweist, die durch einen Umformprozess nicht erzielbar ist. So ist insbesondere das Verhältnis von Kopfdurchmesser zu Schaftdurchmesser größer als das Verhältnis, welches sich durch einen Umformprozess erzielen lässt.

In einer bevorzugten Ausgestaltung sind die Mittenachsen zumindest zwei der Teile versetzt zueinander angeordnet, d.h. der Schaft ist beispielsweise exzentrisch zum Kopf und/oder dem Stiftende angeordnet.

Gemäß einer zweckdienlichen Weiterbildung ist der Schaft zudem als ein Hohlschaft ausgebildet. Der Schaft wird hierbei aus einem einfachen Rohr als Rohware ausgebildet. Hierdurch lassen sich die Materialkosten gering halten. Zugleich hat ein Hohlschaft eine vergleichsweise hohe Stabilität.

Um die Eigenschaften des Hohlschafts zu verbessern, ist dieser bevorzugt mit einem vom Schaftmaterial verschiedenen Material gefüllt. Insbesondere ist hierbei vorgesehen, dass der Hohlraum mit einem gut wärmeleitfähigen Material, beispielsweise Kupfer, gefüllt ist. Alternativ besteht auch die Möglichkeit, den Hohlschaft mit einem Stahlschaum zu füllen, um höhere Druckkräfte übertragen zu können.

Insbesondere um eine einfache Montage beim Zusammenfügen zweier Modulteile zu ermöglichen, greift der Kopf- und/oder das Stiftende mit einem inneren Kragen in den Hohlschaft ein. Der Kopf- und/oder das Stiftende werden daher quasi in den Hohlschaft eingesteckt, bevor sie insbesondere durch Reibschweißen mit diesem fest verbunden werden.

Alternativ zu der Ausgestaltung eines inneren Kragens ist ein äußerer Kragen am Kopf vorgesehen, der den Schaft außenseitig überlappt. Auch hierdurch wird eine Montagehilfe erreicht. Zugleich wird durch den außenseitigen Schaft eine sich ausbildende Schweißnaht überdeckt, so dass zwischen dem Kragen und dem Schaft eine definierte, wulstfreie Übergangsstelle geschaffen ist. Es ist daher keine Nachbearbeitung im Bereich der Schweißnaht erforderlich, um eine hohe Maßhaltigkeit im Unterkopfbereich beim Übergang des Kopfes zum Schaft zu erzielen.

In einer zweckdienlichen Weiterbildung ist der Hohlschaft in mehrere Teilräume unterteilt, so dass die Teilräume nach Art von Medienführungen wirksam sein können. Insgesamt werden durch die Bereitstellung von mehreren Teilräumen innerhalb des Hohlschafts mehrere Funktionszonen geschaffen, die sich in Längsrichtung des Hohlschafts erstrecken.

Alternativ zu der Ausgestaltung als Hohlschaft mit mehreren Teilräumen besteht die Möglichkeit, in einen massiven Schaft aus Vollmaterial zumindest eine Bohrung in Längsrichtung einzubringen. Diese Bohrung ist zugleich vorzugsweise durch den Kopf hindurchgeführt und dient beispielsweise als Messbohrung zum Einfügen von Messsonden oder Fühlern. Auch können zwei oder mehrere Bohrungen vorgesehen sein, die als Medienzuführungen dienen.

Um gegebenenfalls ein Kühlmittel in einem Kreislauf durch den Werkzeugstift führen zu können, ist zweckdienlicherweise im Verbindungsbereich zwischen dem Stiftende und dem Schaft ein Freiraum ausgebildet, über den die getrennten Teilräume oder auch die Bohrungen des Schafts miteinander verbunden sind. Dieser Freiraum ist beispielsweise eine in die Stirnseite des Stiftendes eingearbeitete Mulde, in die die Bohrungen oder die Teilräume münden. Auf diese Weise lässt sich in einfacher Weise ein Kreislauf ausbilden.

In einer bevorzugten Ausgestaltung weisen die beiden miteinander verbundenen Modulteile im Verbindungsbereich eine Ringnut auf. Diese wird insbesondere durch eine Verjüngung des Querschnitts der jeweiligen Teile im Verbindungsbereich erzielt. Durch die Ringnut ist keine spanende Nachbearbeitung einer eventuell entstehenden Schweißnaht im Verbindungsbereich erforderlich. Diese steht aufgrund der durch die Ringnut gebildeten Vertiefung nicht über das vorgegebene Außenmaß des Schafts bzw. Stiftendes über. Alternativ zur Verjüngung der Teile im Verbindungsbereich vor dem eigentlichen Zusammenfügen wird die Ringnut bevorzugt erst nach dem Zusammenfügen der beiden Teile durch eine Nachbearbeitung eingebracht. Dabei wird der Durchmesser im Verbindungsbereich auf unter das Sollmaß beispielsweise abgedreht. Hierdurch wird sicher gewährleistet, dass im Verbindungsbereich kein Übermaß besteht. Zugleich dient diese Ringnut als Schmier- und Reinigungsnut zur Standzeiterhöhung, da sich in dieser Nut eventuell bestehende Verunreinigungen ansammeln können oder Schmiermittel beigegeben werden kann.

Bei den Werkzeugformen, insbesondere Spritz- oder Druckgusswerkzeugformen, bei denen die Werkzeugstifte insbesondere als Auswerfer oder Kerne eingesetzt werden, handelt es sich üblicherweise um Spezialanfertigungen, so dass üblicherweise für jede Werkzeugform unterschiedliche Werkzeugstifte, insbesondere unterschiedlicher Längen eingesetzt werden müssen. Üblicherweise wird hierbei derart vorgegangen, dass die Werkzeugstifte in einer Überlänge bestellt und dann auf das gewünschte Maß abgelängt werden. Um hierzu bei dem Werkzeugformenbauer eine möglichst große Flexibilität zu ermöglichen, ist in einer zweckdienlichen Ausgestaltung vorgesehen, dass mehrere Werkzeugstifttypen zu einem Set zusammengefügt sind, bei denen die Werkzeugstifte und die speziell ausgebildeten Stiftenden im Hinblick auf ihre Länge derart aufeinander angepasst sind, dass beliebige Längen an Werkzeugstiften durch Ablängen ausgebildet werden können. Dies wird dadurch erreicht, dass die Typen des Sets unterschiedlich lange Werkzeugstifte bereit halten, und die Stiftenden der Werkzeugstifttypen sich quasi aneinander anschließen bzw. etwas überlappen.

Die Aufgabe wird enfndungsgemäß weiterhin gelöst durch ein Verfahren zum Herstellen eines Werkzeugstifts gemäß Anspruch 14. Die im Hinblick auf den Werkzeugstift angeführten Vorteile und bevorzugten Ausgestaltungen lassen sich sinngemäß auch auf das Verfahren übertragen.

Beim Verfahren wird prinzipiell derart vorgegangen, dass zunächst zumindest die eigenständigen Modulteile vorbereitet werden, die insbesondere durch Reibschweißen oder auch durch Hartlöten mechanisch fest zusammengefügt werden. Zweckdienlicherweise ist hierbei vorgesehen, dass im ersten Schritt das Stiftende mit dem Schaft verbunden und auf Maß geschliffen wird, und dass erst anschließend der Kopf am Schaft befestigt wird. Sofern erforderlich werden die durch das Reibschweißen gebildeten Schweißnähte durch eine einfache spanende Bearbeitung, insbesondere eine Einstech-Drehoperation oder Schleifoperation nachbearbeitet.

Ausführungsbeispiele der Erfindung werden im Folgenden anhand der Zeichnung näher erläutert. Es zeigen jeweils in schematischen und vereinfachten Querschnitts**Darstellungen:**
- Fig. 1: einen aus drei Modulteilen zusammengesetzten Scheneidstempel,der nicht gemäβ der Erfindung ist,
- Fig. 2: einen aus drei Modulteilen zusammengesetzten Werkzeugstift mit einem konturierten Stiftende und einem Hohlschaft,
- Fig. 3: einen als Auswerferstift ausgebildeten Werkzeugstift mit unterschiedlichen Durchmessern des Schafts und des Stiftendes,
- Fig. 4: einen aus drei Modulteilen bestehenden Werkzeugstift mit einem Hohlschaft, in den der Kopf und das Stiftende jeweils mit einem inneren Kragen eingesteckt sind,
- Fig. 5: einen Werkzeugstift, bei dem der Kopf einen äußeren, den Schaft überlappenden Kragen aufweist,
- Fig. 6: einen Werkzeugstift mit eingearbeiteten Bohrungen,
- Fig. 7: einen Werkzeugstift, der für eine Medienführung im Kreislauf ausgebildet ist und dessen Stiftende hierzu an seiner zum Schaft orientierten Stirnseite eine muldenartige, einen Freiraum bildende Vertiefung aufweist,
- Fig. 8: einen Hülsen-Werkzeugstift, bestehend aus drei hülsenartigen Modulteilen,
- Fig. 9: einen Werkzeugstift mit einem im Vergleich zum Schaft sehr großen Kopf, der nicht gemäβ der Erfindung ist ,
- Fig. 10: ein Set, bestehend aus drei unterschiedlichen Typen von Werkzeugstiften und
- Fig. 11a-c: Seitenansichten und Draufsichten von unten auf Werkzeugstifte mit unterschiedlichen Kopfformen, Querschnittskonturen der drei Teile und zueinander versetzten Mittenachsen.

In den Figuren sind gleich wirkende Teile mit den gleichen Bezugszeichen versehen.

Die in den Figuren jeweils dargestellten Werkzeugstifte 2 bestehen in den Ausführungsbeispielen jeweils aus den drei separaten Modulteilen Kopf 4, Schaft 6 sowie Stiftende 8, die untereinander jeweils fest mechanisch miteinander verbunden sind. Der Kopf 4 und der Schaft 6 weisen eine kreisrunde Querschnittsgeometrie auf. Der Kopf 4 ist üblicherweise plattenförmig mit einem im Vergleich zum Schaft 6 größeren Durchmesser ausgebildet, so dass er über den Schaft 6 übersteht. Das Stiftende 8 weist in den Ausführungsbeispielen ebenfalls eine kreisrunde Querschnittsgeometrie auf, kann jedoch abweichend hiervon - ebenso wie der Kopf 4 oder der Schaft 6 - auch eine andere Querschnittsform, beispielsweise eine rechteckige oder quadratische oder auch ovale Querschnittsform einnehmen. Die einzelnen Modulteile 4,6,8 werden vorzugsweise jeweils aus geeigneten Halbzeugen, beispielsweise Stangen, Rohre, Stranggußprofile etc. gefertigt, die bereits die gewünschte (Außen-)Geometrie aufweisen. Für den Kopf 4 wird hierbei vorzugsweise ein zäher Kaltarbeitsstahl WS oder auch Warmarbeitsstahl WAS eingesetzt, der bevorzugt geschmiedet gegossen oder auch gedreht ist. Für das Modulteil des Schafts 6 wird insbesondere ein ebenfalls zäher Warmarbeitsstahl WS, beispielsweise in Form eines Stabs oder eines Stahlrohrs mit geeigneter Wandstärke herangezogen.

Für das Modulteil des Stiftendes 8 kommen als Werkstoffe vorzugsweise Keramik, Hartmetall, ein pulvermetallurgischer Stahl oder auch ein hochlegierter Schnellarbeitsstahl HSS zum Einsatz. Bei dem Hartmetall, dem pulvermetallurgischen Stahl oder auch der Keramik werden vorgefertigte Formteile durch Pressen und insbesondere Sintern bereitgestellt, die anschließend mit dem Schaft 6 verbunden werden.

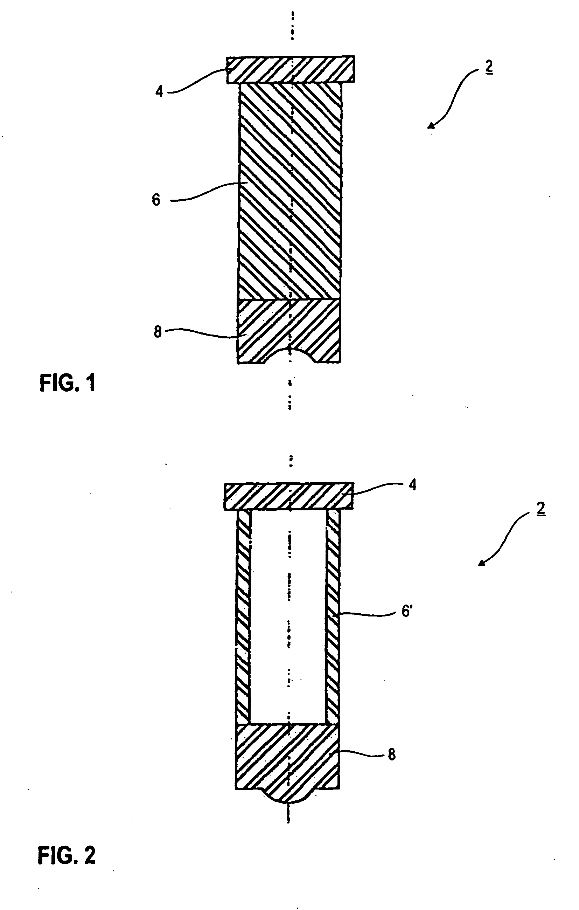

In den Ausführungsbeispielen der Fig. 2, 4 und 8 ist das Modulteil des Schafts 6 als ein Hohlschaft 6' ausgebildet. Der Innenraum des Hohlraums ist in den Ausführungsbeispielen ungefüllt bzw. mit einem Gas, beispielsweise Luft oder auch einem Inertgas, gefüllt. Alternativ hierzu besteht die Möglichkeit, den Hohlraum mit einem Stahlschaum, mit einem nichteisen-metallischen Schaum, mit Kupfer oder weiteren Legierungen zu füllen.

Abweichend von den oben genannten Werkstoffen werden hochwärmeleitfähige Stoffe eingesetzt, wenn der jeweilige Werkzeugstift 2 für eine sehr hohe Wärmeleitfähigkeit ausgebildet sein soll. Insbesondere wird eine geeignete Kupferlegierung in Form einer Spezial-Kupferknetlegierung eingesetzt. Auch kann hierzu der Hohlraum des Hohlschafts 6' mit einem hochwärmeleitfähigen Stoff angefüllt sein.

Bei der Herstellung der Werkzeugstifte 2 wird allgemein derart vorgegangen, dass zunächst die einzelnen Modulteile 4,6,6',8 als vorgefertigte Teil-Bauteile bereitgestellt werden, so dass nach dem Zusammenfügen am Werkzeugstift 2 keine oder nur noch geringe Nachbearbeitungen erforderlich sind. Zunächst werden die beiden Modulteile Schaft 6 und Stiftende 8 miteinander insbesondere durch Reibschweißen verbunden. Gegebenenfalls erfolgt eine spanabhebende Nachbearbeitung oder auch ein Schleifen oder Drehen auf das Sollmaß. Das auf Maß geschliffene und aus den Modulteilen Schaft 6 und Stiftende 8 bestehende Teil wird anschließend mit dem Modulteil Kopf 4 verbunden. Schließlich wird die zwischen Kopf 4 und dem Schaft 6 gebildete Schweißnaht spanend nachbearbeitet.

Im Vergleich zu einem herkömmlichen Werkzeugstift, der einteilig durch Umformen hergestellt ist, weist dieser modular aufgebaute Werkzeugstift 2 eine deutlich höhere Flexibilität auf und kann besser an die jeweiligen Anforderungen angepasst werden. Insbesondere können die drei Funktionsbereiche Kopf 4, Schaft 6 und Stiftende 8 in einfacher und kostengünstiger Weise sehr genau an die jeweiligen Anforderungen angepasst werden. Gleichzeitig ist ein optimaler Materialeinsatz erreicht, da beispielsweise bei unterschiedlichen Querschnittsgeometrien bereits Rohmaterial mit angepasster Querschnittsgeometrie herangezogen wird und somit kein Material abgetragen werden muss. Durch die Verwendung eines Hohlschafts 6' wird zudem Gewicht eingespart. Da die einzelnen Funktionsbereiche jeweils exakt an die Anforderungen angepasst sind, ist zudem die Standzeit des Werkzeugstifts erhöht. Durch den modularen Aufbau lassen sich zudem in einfacher Weise zusätzliche Funktionen einfach und kostengünstig implementieren, beispielsweise eine hohe Wärmeleitfähigkeit oder auch die Möglichkeit einer Medienzu- bzw. -abführung.

Anhand der Fig. 1 bis 9 werden nunmehr unterschiedliche Ausführungsvarianten an Werkzeugstiften 2 beschrieben.

Der Werkzeugstift 2 gemäß Fig. 1 ist als ein Schneidstempel ausgeführt, dessen Stiftende 8 an seiner freien Endseite eine Konturierung aufweist. Der Schaft 6 ist in diesem Ausführungsbeispiel ebenfalls wie der Kopf 4 aus Vollmaterial ausgebildet.

Das Ausführungsbeispiel nach Fig. 2 unterscheidet sich von dem nach Fig. 1 dadurch, dass als Schaft 6 ein Hohlschaft 6' verwendet ist und dass die Konturierung am Stiftende 8 durch eine außenseitige Wölbung gebildet ist.

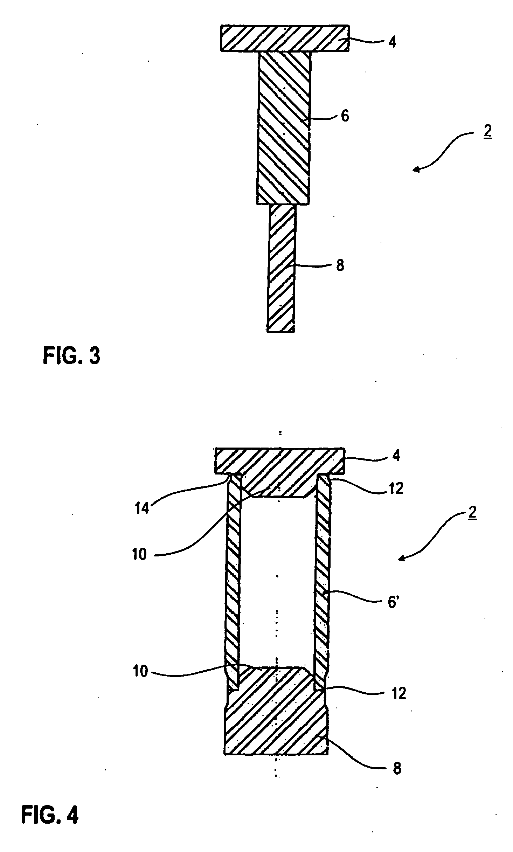

Beim Ausführungsbeispiel gemäß Fig. 3 weisen der Schaft 6 und das Stiftende 8 unterschiedliche Querschnittsflächen und unterschiedliche Durchmesser auf. Bei einer derartigen Ausführungsform ist es von besonderem Vorteil, dass der Schaft 6 und das Stiftende 8 aus unterschiedlichen Modulteilen bestehen, wobei die jeweiligen Modulteile aus an den jeweiligen Enddurchmesser angepassten Rohstäben gebildet sind.

Fig. 4 zeigt eine Ausführungsvariante, bei der sowohl der Kopf 4 als auch das Stiftende 8 als Montagehilfe einen etwa zylindrischen Ansatz 10 aufweisen, welcher in das Innere des Hohlschafts 6' hineinreicht. Der Ansatz 10 hat jeweils eine Einführschräge, um ein einfaches Einstecken des Kopfes 4 bzw. des Stiftendes 8 in den Hohlschaft 6' zu ermöglichen. Der Ansatz 10 bildet einen inneren Kragen des Kopfes 4 bzw. des Stiftendes 8, der in den Hohlschaft 6' hineinreicht. Dieser Ansatz 10 bzw. der innere Kragen kann anstelle der in Fig. 4 gezeigten massiven Ausführung auch nach Art eines umlaufenden, hülsenartigen Stegs ausgebildet sein.

Weiterhin sind beim Ausführungsbeispiel gemäß Fig. 4 in den beiden Verbindungsbereichen zwischen Kopf 4 und Hohlschaft 6' bzw. zwischen Hohlschaft 6' und Stiftende 8 außenseitige Ringnuten 12 vorgesehen. Gleichzeitig weist der Kopf 4 im Bereich der Ringnut 12 an seiner Unterseite ebenfalls eine umlaufende Nut 14 auf. Durch die Nuten 12,14 ist eine Nachbearbeitung der beim Reibschweißen entstehenden Schweißnaht nicht erforderlich, da diese nicht über das Sollmaß, welches durch den Außenumfang des Schafts 6 bzw. des Stiftendes 8 definiert ist, übersteht. Alternativ wird die Ringnut 12 erst nach dem Zusammenfügen durch eine spanende Bearbeitung, insbesondere eine Drehoperation, eingebracht. Zugleich ist der Übergang zwischen dem Kopf 4 zum Schaft 6 klar definiert, insbesondere ist dort kein Wulst ausgebildet. Schließlich dient die Ringnut 12 im Übergangsbereich zwischen dem Hohlschaft 6' und dem Stiftende 8 auch als Schmiermittel- und Reinigungsnut. Die Ringnut 12 im Bereich des Stiftendes 8 ist hierbei gebildet durch eine endseitige Querschnittsverjüngung sowohl des Schafts 6 als auch des Stiftendes 8.

Im Unterschied zu dem Ausführungsbeispiel nach Fig. 4 besteht auch die Möglichkeit, dass lediglich im Kopfbereich bzw. lediglich im Bereich des Stiftendes 8 eine Ringnut 12 vorgesehen ist und/oder lediglich der Kopf 4 oder das Stiftende 8 den Ansatz 10 aufweisen.

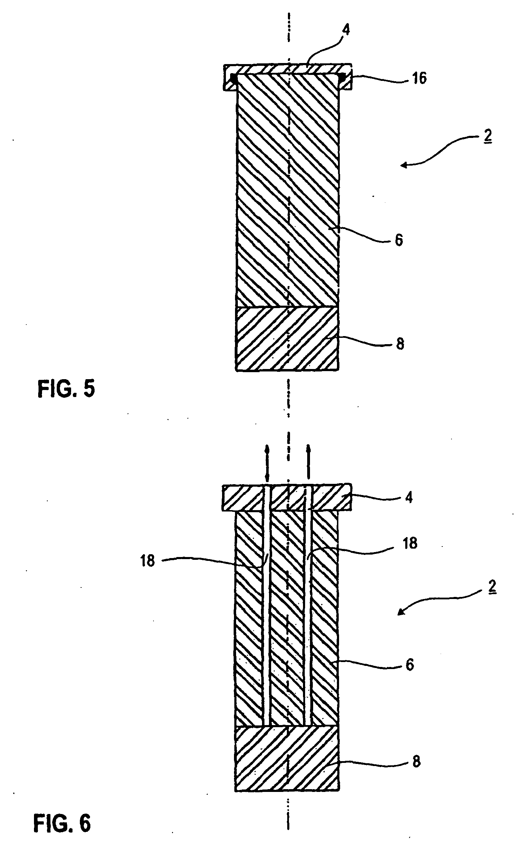

Beim Ausführungsbeispiel der Fig. 5 ist der Kopf 4 mit einem außenseitigen Kragen 16 versehen, welcher den Schaft 6 überdeckt. Insgesamt weist der Kragen 16 ausgehend von einer oberen Kopfplatte eine L-förmige Querschnittskontur auf und stützt sich mit seinem einen L-Schenkel an der Schaftaußenseite ab. Der äußere Kragen 16 ist mit seiner den zweiten L-Schenkel bildenden und sich in Längsrichtung erstreckenden Kragenwand von der Schaftaußenwand beabstandet, so dass zwischen Kragen 16 und Schaft 6 ein Hohlraum besteht, in den sich die Schweißnaht beim Reibschweißen ausbreiten kann. Auch bei dieser Ausführungsvariante ist keinerlei Nachbearbeitung der Schweißnaht erforderlich und es ist ein definierter Übergang zwischen dem Kopf 4 und dem Schaft 6 gewährleistet. Zudem ist durch die L-förmige Ausgestaltung des Kragens 16 der Kopf 4 in einer definierten Position bezüglich des Schafts 6 als Montage- und Fixierhilfe gehalten.

Alternativ zu der in Fig. 5 gezeigten Variante erstreckt sich der Kragen 16 lediglich nach Art eines Steges insbesondere Ringsteges parallel und beabstandet zum Schaft 6 nach unten. Im Abstandsbereich ist Raum für den Schweißwulst.

Die Ausführungsvariante gemäß Fig. 6 ist gekennzeichnet durch zwei durch den Kopf 4 und den Schaft 6 hindurchgehende Bohrungen 18, die beispielsweise zur Aufnahme von Messsonden, Fühlern, etc. dienen. Die Bohrungen 18 sind vorzugsweise bereits vor dem Zusammenfügen der beiden Teile 4,6 eingebracht. Um hier eine fluchtende Ausrichtung der Bohrungen 18 im Kopf 4 zu denen des Schafts 6 zu gewährleisten, ist vorzugsweise eine Positionierhilfe beispielsweise in Form eines Anschlages oder einer Nut vorgesehen, so dass die beiden Teile 4,6 nur in einer festen Drehorientierung zueinander fixierbar sind.

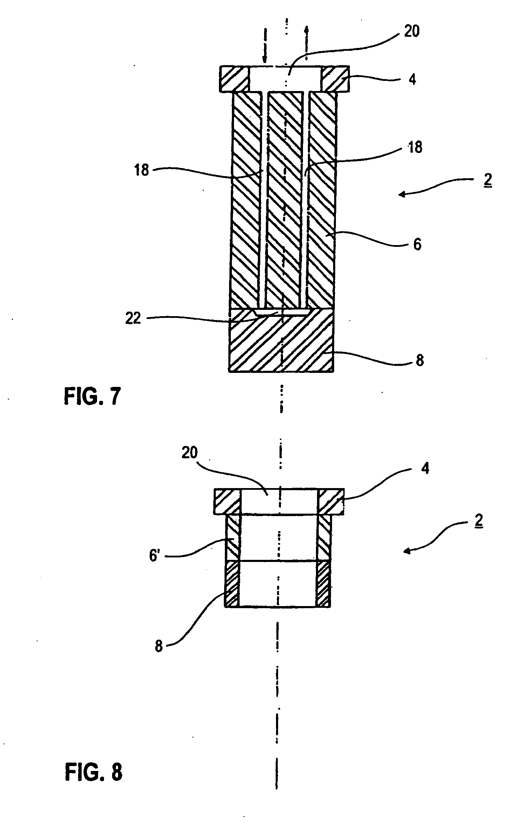

Beim Ausführungsbeispiel der Fig. 7 ist der Kopf 4 nach Art einer Lochscheibe mit einem zentralen Durchgang 20 ausgebildet. Der Schaft 6 weist wiederum zwei Bohrungen 18 auf, die zum Durchgang 20 hin münden. Zum Stiftende 8 hin münden die Bohrungen 18 in einer einen Freiraum bildenden Mulde 22, die im Stiftende 8 ausgebildet ist. Alternativ hierzu besteht auch die Möglichkeit, dass die Mulde 22 auf Seiten des Schafts 6 ausgebildet ist. Durch die Mulde 22 besteht die Möglichkeit, durch den Werkzeugstift 2 ein flüssiges Medium, beispielsweise ein Kühlmedium, im Kreislauf zu führen, wie durch die Pfeile angedeutet ist. Zum Anschluss eines Vor- bzw. Rücklaufs ist bei der in Fig. 7 dargestellten Ausführungsvariante beispielsweise vorgesehen, dass ein Anschluss-Stopfen in den Durchgang 20 eingesetzt wird, von dem die Zu- bzw. Ableitungen für die Kühlflüssigkeit angeschlossen sind.

Bei der Ausführungsvariante der Fig. 8 und die Modulteile 4,6',8 jeweils hülsenförmig mit einem durchgehenden inneren Freiraum ausgebildet. Ein derartiger Werkzeugstift 2 dient insbesondere auch als Führungshülse zur Führung eines weiteren Werkzeugstifts 2 in seinem Inneren.

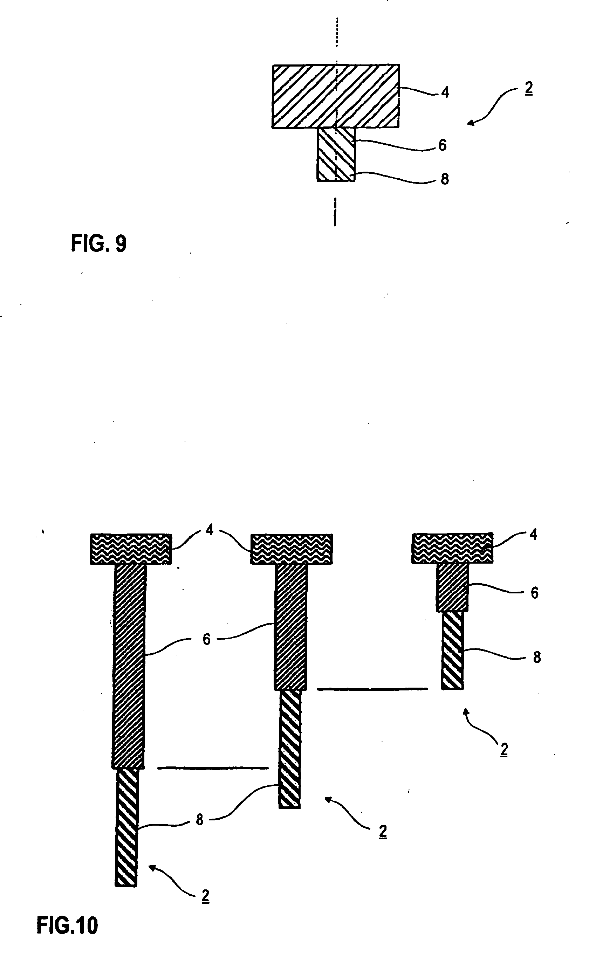

Gemäß Fig. 9 weist der Kopf 4 im Vergleich zum Schaft 6 ein sehr hohes Höhen- zu Breite (Durchmesser) Verhältnis auf, welches allein durch einen Umformvorgang des Schafts 6 nicht erreichbar ist. Durch den modularen Aufbau können beliebige Kopfformen erreicht werden, sowohl hinsichtlich der Außenkontur als auch hinsichtlich der Dicke, Höhe, Durchmesser, etc. Im Unterschied zu den anderen Ausführungsbeispielen ist in Fig. 9 der Schaft 6 und das Stiftende 8 einstückig ausgebildet.

Fig. 10 zeigt ein Set bestehend aus drei Typen unterschiedlich langer Werkzeugstifte 2. Die Gesamtlänge des jeweiligen Werkzeugstifts 2 des Sets sowie die Längen ihres Stiftendes 8 sind dabei jeweils derart bemessen, dass - wie der Fig. 10 bei der Nebeneinanderstellung der drei Werkzeugstifte 2 zu entnehmen ist - die Stiftenden 8 - bei einer gedachten Projektion in Querrichtung - sich jeweils aneinander anschließen bzw. einander in einem Teilbereich überlappen. Durch diese Ausführungsvariante wird ein Werkzeugstift-System bereitgestellt, bei dem der Hersteller der Werkzeugform, in der diese Werkzeugstifte 2 eingesetzt werden sollen, die Werkzeugstifte 2 auf eine gewünschte Länge ablängen kann. Durch das Set ist hierbei ein sehr großer Längenbereich gegeben, über den ein Ablängen möglich ist. Gleichzeitig ist das Stiftende 8 bei dem einzelnen Werkzeugstift 2 vergleichsweise kurz, so dass die Stückkosten des jeweiligen Werkzeugstifts 2 gering sind.

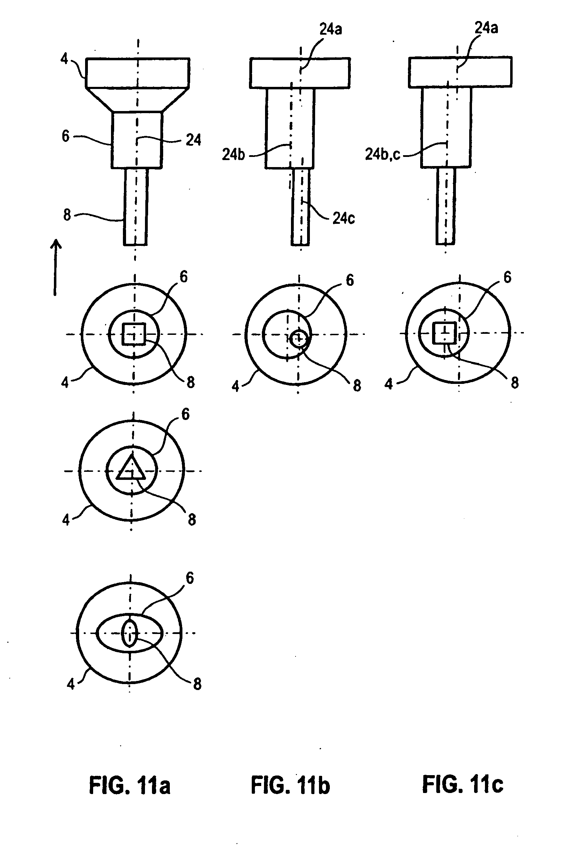

In Fig. 11a-c sind Ausführungsvarianten dargestellt, anhand derer die Variabilität aufgrund des modularen Aufbaus noch einmal illustriert wird. Die einzelnen Figuren 11 a-c zeigen jeweils einen Werkzeugstift 2 in einer Seitenansicht sowie ein oder mehrere Draufsichten von unten auf das Stiftende 8. Aufgrund des modularen Aufbaus können bei den einzelnen Werkzeugstiften 2 beliebige Kopfformen mit beliebigen, Schaftformen und mit beliebigen Formen des Stiftendes 8 kombiniert werden. In den Figuren 11a-c sind beispielhaft unterschiedliche Querschnittskonturen der einzelnen Teile 4,6,8 dargestellt. Insbesondere lassen sich die einzelnen Teile zueinander auch exzentrisch anordnen, so dass ihre Mittenachsen 24a-c, also in der Regel die Rotationslängsachse des jeweiligen Teils, versetzt zueinander verlaufen. Beim Ausführungsbeispiel der Fig. 11a fallen die Mittenachsen 24a-c zusammen, die einzelnen Teile 4,6,8 liegen auf einer gemeinsamen Mittenachse 24. Beim Ausführungsbeispiel der Fig. 11b sind alle drei Mittenachsen 24a-c versetzt zueinander angeordnet und beim Ausführungsbeispiel der Fig. 11c ist nur die Mittenachse 24a des Kopfes 4 versetzt angeordnet.

Auch die Kopfformen können problemlos variiert werden. So zeigt Fig. 11 eine Kopfform mit einem kegelförmigen Unterteil, das sich an ein plattenartiges Oberteil anschließt. Ergänzend kann auch an der Oberseite des Oberteils sich ein kegelförmiges Teil anschließen oder der gesamte Kopf kann kegelförmig ausgebildet sein.

### Bezugszeichenliste

- 2: Werkzeugstift
- 4: Kopf
- 6: Schaft
- 6': Hohlschaft
- 8: Stiftende
- 10: Ansatz
- 12: Ringnut
- 14: Nut
- 16: Kragen
- 18: Bohrung
- 20: Durchgang
- 22: Mulde
- 24a,b,c: Mittenachse

## Patentansprüche

1. Werkzeugstift (2) für eine Werkzeugform, nämlich Auswerferstift bestehend aus den Teilen Kopf (4), einem sich daran in Längsrichtung anschließenden Schaft (6,6') sowie ein einendseitig am Schaft (6) vorgesehenen Stiftende (8) **dadurch gekennzeichnet, dass** diese drei Teile (4,6,6',8) als eigenständige Modulteile ausgebildet sind, die mit Hilfe eines Fügeprozesses mechanisch fest zusammengefügt sind.

2. Werkzeugstifte (2) nach Anspruch 1
bei dem die Teile (4,6,6',8) durch Schweißen, insbesondere Reibschweißen zusammengefügt sind.

3. Werkzeugstift (2) nach Anspruch 1 oder 2,
bei dem der Kopf (4) und/oder das Stiftende (8) einen inneren Kragen (10) hat, der in den als Hohlschaft (6') ausgebildeten Schaft eingreift.

4. Werkzeugstift (2) nach einem der vorhergehenden Ansprüche,
bei dem der Kopf (4) einen äußeren Kragen (16) aufweist, der den Schaft (6,6') außenseitig überlappt.

5. Werkzeugstift (2) nach einem der vorhergehenden Ansprüche,
bei dem zumindest zwei Teile (4,6,6',8) unterschiedliche Querschnittskonturen äufweisen.

6. Werkzeugstift (2) nach einem der vorhergehenden Ansprüche,
bei dem der Schaft (6,6') und das Stiftende (8) unterschiedliche Durchmesser aufweisen.

7. Werkzeugstift (2) nach einem der vorhergehenden Ansprüche,
bei dem das Verhältnis von Kopfdurchmesser zu Schaftdurchmesser größer ist als das Verhältnis, das sich bei einem aus einem Schaft durch einen Umformprozess ausgebildeten Kopf erzielen lässt.

8. Werkzeugstift (2) nach einem der vorhergehenden Ansprüche,
bei dem im Verbindungsbereich zwischen dem Stiftende (8) und dem Schaft (6,6') ein Freiraum (22) ausgebildet ist, über den getrennte Teilräume (18) des Schafts (6,6') miteinander verbunden sind.

9. Werkzeugstift (2) nach einem der vorhergehenden Ansprüche,
bei dem als Werkstoff für den Schaft (6,6') ein nitrierter Stahl oder eine Kupfer-knetlegierung mit hoher Temperaturteitfähigkeit verwendet ist und bei dem als Werkstoff für den Kopf (4) ein legierter Kaltarbeitsstahl, ein legierter Warmarbeitsstahl oder eine Kupferknetlegierung mit hoher Temperaturleitfähigkeit verwendet ist und bei dem als Werkstoff für das Stiftenden (8) ein hochlegierter Stahl, insbesondere Schnellarbeitsstahl, ein pulvermetallurgischer Stahl, ein Hartmetall oder eine Keramik vorgesehen ist.

10. Werkzeugstift (2) nach einem der vorhergehenden Ansprüche,
bei dem der Schaft als ein Hohlschaft (6') ausgebildet ist und der Hohlschaft (6') mit einem vom Schaftmaterial verschiedenen Material gefüllt ist.

11. Werkzeugstift (2) nach einem der vorhergehenden Ansprüche,
bei dem der Schaft als ein Hohlschaft (6') ausgebildet ist und der Hohlschaft (6') in mehrere Teilräume unterteilt ist.

12. Werkzeugstifte (2) nach einem der vorhergehenden Ansprüche,
bei dem durch den Schaft (6,6') und den Kopf (4) zumindest eine Bohrung (18) in Längsrichtung hindurchgeführt ist.

13. Werkzeugstift (2) nach einem der vorhergehenden Ansprüche,
bei den die beiden miteinander verbundenen Teile (4,6,6',8) im Verbindungsbereich eine Ringnut (12) aufweisen.

14. Verfahren zum Herstellen eines Werkzeugstifts (2) nach einem der vorhergehenden Ansprüche,
bei dem drei eigenständige Modulteile (4,6,6',8) mit Hilfe eines Fügeprozesses mechanisch fest zusammengefügt werden.

15. Verfahren nach Anspruch 14,
bei dem zunächst der mit dem Stiftende (8) versehene Schaft (6) auf Maß geschliffen und anschließend der Kopf (4) am Schaft (6) befestigt wird.

## Claims

1. A mould pin (2) for a mould, namely an ejector pin or a cutting punch, consisting of the following parts: a head (4), a shaft (6, 6') adjacent thereto in longitudinal direction, as well as a pin end (8) provided on the end face of the shaft (6), these three parts (4, 6, 6', 8) being formed as independent module parts which are securely mechanically assembled by means of an assembly process.

2. The mould pin (2) of claim 1,
wherein the parts (4, 6, 6', 8) are assembled by welding, in particular by friction welding.

3. The mould pin (2) of claim 1 or 2,
wherein the head (4) and/or the pin end (8) is provided with an internal collar (10), engaging into the shaft configured as a hollow shaft (6').

4. The mould pin (2) of any of the preceding claims,
wherein the head (4) is provided with an external collar (16), overlapping the shaft (6, 6') on the outside.

5. The mould pin (2) of any of the preceding claims,
wherein at least two parts (4, 6, 6', 8) have different cross-section profiles.

6. The mould pin (2) of any of the preceding claims,
wherein the shaft (6,6') and the pin end (8) have different diameters.

7. The mould pin (2) of any of the preceding claims,
wherein the ratio between head diameter and shaft diameter is larger than the ratio which can be achieved for a head formed from a shaft through a forming process.

8. The mould pin (2) of any of the preceding claims,
wherein a clearance (22) is formed in the connection area between the pin end (8) and the shaft (6, 6'), which clearance (22) connects separate partial spaces (18) of the shaft (6, 6') with each other.

9. The mould pin (2) of any of the preceding claims,
wherein a nitrated steel or a wrought copper alloy with high thermal diffusivity is used as material for the shaft (6, 6') and wherein an alloyed cold-work steel, an alloyed hot-work steel or a wrought copper alloy with high thermal diffusivity is used as material for the head (4), and wherein a high-alloy steel, in particular a highspeed steel, a powder-metallurgical steel, a sintered carbide, or a ceramic is provided as material for the pin end (8).

10. The mould pin (2) of any of the preceding claims,
wherein the shaft is configured as a hollow shaft (6') and the hollow shaft (6') is filled with a material other than the material of the shaft.

11. The mould pin (2) of any of the preceding claims,
wherein the shaft is configured as a hollow shaft (6') and the hollow shaft (6') is divided into several partial spaces.

12. The mould pin (2) of any of the preceding claims,
wherein at least one drill hole (18) passes through the shaft (6,6') and the head (4) in longitudinal direction.

13. The mould pin (2) of any of the preceding claims,
wherein the two parts (4, 6, 6', 8) connected with each other have an annular groove (12) in the connection area.

14. A method for producing a mould pin (2) of any of the preceding claims,
wherein three independent module parts (4, 6, 6', 8) are securely mechanically assembled by means of an assembly process.

15. The method of claim 14,
wherein first of all, the shaft (6) provided with the pin end (8) is ground to measure and afterwards, the head (4) is fastened on the shaft (6).

## Revendications

1. Broche de moule (2) pour un moule, à savoir broche d'éjecteur ou poinçon de découpage, se composant des parties suivantes: une tête (4), une queue (6, 6') y adjacente en sens longitudinal, ainsi qu'un bout de broche (8) prévu sur la face terminale de la queue (6), ces trois parties (4, 6, 6', 8) étant réalisées comme pièces modulaires indépendantes, qui sont assemblées fermement de manière mécanique à l'aide d'un processus d'assemblage.

2. Broche de moule (2) selon la revendication 1,
dans laquelle les parties (4, 6, 6', 8) sont assemblées par soudage, en particulier par soudage par friction.

3. Broche de moule (2) selon la revendication 1 ou 2,
dans laquelle la tête (4) et/ou le bout de la broche (8) est muni d'un collet intérieur (10) qui s'engage dans la queue réalisée comme queue creuse (6').

4. Broche de moule (2) selon l'une quelconque des revendications précédentes,
dans laquelle la tête (4) est munie d'un collet extérieur (16) qui recouvre la queue (6, 6') à l'extérieur.

5. Broche de moule (2) selon l'une quelconque des revendications précédentes,
dans laquelle au moins deux parties (4, 6, 6', 8) ont des profils de section différents.

6. Broche de moule (2) selon l'une quelconque des revendications précédentes,
dans laquelle la queue (6,6') et le bout de la broche (8) ont des diamètres différents.

7. Broche de moule (2) selon l'une quelconque des revendications précédentes,
dans laquelle le rapport entre le diamètre de la tête et le diamètre de la queue est plus grand que le rapport qui peut être atteint pour une tête formée d'une queue par un processus de formage.

8. Broche de moule (2) selon l'une quelconque des revendications précédentes,
dans laquelle un écartement (22) est formé dans la zone de connexion entre le bout de la broche (8) et la queue (6, 6'), dit écartement (22) reliant des espaces partiels (18) séparés de la queue (6, 6') l'un avec l'autre.

9. Broche de moule (2) selon l'une quelconque des revendications précédentes,
dans laquelle un acier nitruré ou un alliage de cuivre de corroyage à haute diffusivité thermique est utilisé comme matériau pour la queue (6, 6') et dans laquelle un acier allié pour travail à froid, un acier allié pour travail à chaud ou un alliage de cuivre de corroyage à haute diffusivité thermique est utilisé comme matériau pour la tête (4) et dans laquelle un acier fortement allié, en particulier une acier à coupe rapide, un acier produit par métallurgie des poudres, un carbure fritté ou une céramique est pourvu comme matériau pour le bout de la broche (8).

10. Broche de moule (2) selon l'une quelconque des revendications précédentes,
dans laquelle la queue est réalisée comme queue creuse (6') et la queue creuse (6') est remplie d'un matériau autre que le matériau de la queue.

11. Broche de moule (2) selon l'une quelconque des revendications précédentes,
dans laquelle la queue est réalisée comme queue creuse (6') et la queue creuse (6') est divisée en plusieurs espaces partiels.

12. Broche de moule (2) selon l'une quelconque des revendications précédentes,
dans laquelle au moins une forure (18) passe au travers de la queue (6,6') et la tête (4) en sens longitudinal.

13. Broche de moule (2) selon l'une quelconque des revendications précédentes,
dans laquelle les deux parties (4, 6, 6', 8) reliées l'une avec l'autre ont une rainure annulaire (12) dans la zone de connexion.

14. Procédé pour fabriquer une broche de moule (2) selon l'une quelconque des revendications précédentes,
dans lequel trois pièces modulaires (4, 6, 6', 8) indépendantes sont assemblées fermement de manière mécanique à l'aide d'un processus d'assemblage.

15. Procédé selon la revendication 14,
dans lequel d'abord, la queue (6) munie du bout de la broche (8) est affûtée sur mesure et ensuite, la tête (4) est fixée sur la queue (6).
